# EUROPÄISCHE PATENTSCHRIFT

(11) **EP 1 238 013 B1**
(45) Veröffentlichungstag und Bekanntmachung des Hinweises auf die Patenterteilung: **24.09.2003**
(21) Anmeldenummer: 00975731.1
(22) Anmeldetag: 24.11.2000
(51) Int. Cl.: C08L 83/04, C08K 5/00, C07F 15/00, B01J 31/22

(54) **ADDITIONSVERNETZENDE SILICONKAUTSCHUKMISCHUNGEN**
ADDITION CROSS-LINKED SILICON RUBBER MIXTURES
MELANGES CONSTITUANT UN CAOUTCHOUC DE SILICONE A RETICULATION PAR ADDITION

(30) Priorität: 29.11.1999 DE 19957276
(43) Veröffentlichungstag der Anmeldung: 11.09.2002
(73) Patentinhaber: ABB RESEARCH LTD., 8050 Zürich (CH)
(72) Erfinder: ROCKS, Jens, CH-5408 Ennetbaden (CH)
(74) Vertreter: ABB Patent Attorneys
(86) Internationale Anmeldenummer: CH0000629
(87) Internationale Veröffentlichungsnummer: WO01040378

(56) Entgegenhaltungen:
- EP-A- 0 057 459
- EP-A- 0 169 529
- EP-A- 0 183 967
- EP-A- 0 326 712
- EP-A- 0 875 536
- GB-A- 1 027 051
- US-A- 3 159 601
- DATABASE CCAPLUS [Online] An 1988:221880, CASERI WALTER: "Hydrosilylation chemistry and catalysis with cis-PtCl2(PhCH:CH2)2" XP002160614 & ORGANOMETALLICS, Bd. 7, Nr. 6, - 1988 Seiten 1373-1380,

## Beschreibung

### Technisches Gebiet

Die vorliegende Erfindung betrifft additionsvernetzende Siliconkautschukmischungen, welche sich insbesondere durch eine sehr gute Haftung auf zahlreichen Substraten und eine erheblich erhöhte Reaktionsgeschwindigkeit im Vernetzungsprozess, auszeichnen. Erfindungsgemässe additionsvernetzende Siliconkautschukmischungen werden insbesondere als Beschichtungen auf Substraten, wie beispielsweise auf Glas, Keramik, Metallen oder Kunststoffen oder in der Herstellung von Verbundwerkstoffen verwendet.

Additionsvernetzende Siliconkautschukmischungen als flüssige Gemische, enthaltend (i) mindestens ein Alkenylgruppen enthaltendes Organopolysiloxan und (ii) mindestens ein Organohydrogenpolysiloxan, sind an sich bekannt. Zur Beschleunigung der quervernetzenden Additionsreaktion zwischen der Alkenylgruppe (-CH=CH₂) und der H-Si-Gruppe enthält eine solche Mischung in der Regel als Katalysator mindestens eine dem Fachmann bekannte Komplexverbindung aus der Gruppe der Rhodium-, Nickel-, Palladium- und Platinmetalle, vorzugsweise jedoch Komplexverbindungen von Platin. Es ist aber auch bekannt, dass die aus den genannten flüssigen bis pastösen Gemischen erhaltenen ausgehärteten festen Siliconkautschuke eine ungenügende Haftung auf Substraten wie Glas, Keramik, Metall oder Kunststoff aufweisen. Es wurde deshalb versucht, diese Haftungseigenschaften durch den Zusatz von Additiven zu verbessern, um solche Siliconkautschuke der Herstellung von Beschichtungen und Verbundwerkstoffen zugänglich zu machen.

### Stand der Technik

In US 4.087.585 wird der Zusatz eines kurzkettigen Polysiloxans mit mindestens einer SiOH-Gruppe und eines Silans mit mindestens einer Epoxidgruppe und einer Si-gebundenen Alkoxygruppe vorgeschlagen, um eine genügende Haftung auf Aluminium zu erreichen. Gemäss EP-A-0 326 712 wird eine verbesserte Haftung auf verschiedenen Kunststoffen mittels einer Mischung bzw. einem Reaktionsprodukt, aus (a) einer Silizium freien Verbindung mit mindestens einer alkoholischen OH-Gruppe und mindestens einer Alkylengruppe und (b) einem Organosilan mit mindestens einer Alkoxygruppe und mindestens einer Epoxidgruppe erreicht, wobei jedoch relativ lange Reaktionszeiten (1 Stunde) bei einer Temperatur von 120°C notwendig sind. Die langen Reaktionszeiten werden häufig durch die gleichzeitig anwesenden inhibierend wirkenden Haftadditive verursacht. Gemäss EP-A-0 503 975 kann die Inhibierung durch solche Additive durch die Wahl eines optimierten Verhältnisses der ungesättigten CH₂=CH-Si-Gruppen zu den SiH-Gruppen jedoch nur begrenzt verbessert werden. Eine verbesserte Haftung auf Aluminium wird z.B. erst nach einer relativ langen Vulkanisationszeit von 2 Stunden bei 100°C erreicht. Eine mögliche Verkürzung der Reaktionszeiten durch Temperaturerhöhung kann insbesondere bei vielen Kunststoffsubstraten wegen der fehlenden Temperaturbeständigkeit nicht vorgenommen werden. In EP-A-0 875 536 wird die Kombination von Alkenylgruppen enthaltenden Organopolysiloxanen mit ausgewählten Silanen unter Zusatz von mindestens eines Alkoxysilans mit mindestens einer Epoxidgruppe und/oder eines Alkoxysiloxans mit mindestens einer Epoxidgruppe vorgeschlagen.

Aufgabe der vorliegenden Erfindung ist die Bereitstellung von additionsvernetzenden Siliconkautschukmischungen mit einer guten Haftung auf Substraten, welche die bisherigen Nachteile, wie eine geringe Reaktivität oder eine Vielzahl von Zusatzkomponenten, nicht aufweisen.

### Darstellung der Erfindung

Es wurde nun gefunden, dass additionsvernetzende Siliconkautschukmischungen, vorzugsweise als flüssige bis pastöse Gemische, enthaltend mindestens ein Alkenylgruppen enthaltendes Organopolysiloxan und mindestens ein, gegebenenfalls Dimethylsilyloxygruppen enthaltendes, Organohydrogenpolysiloxan, und als Katalysator cis-Dichlorobis(styrol)platin(II), gegebenenfalls im Gemisch mit weiteren üblichen Katalysatoren, ohne Zusatzkomponeten, eine hohe Reaktivität und ein gehärtetes Produkt mit sehr guten Haftungseigenschaften ergeben. Die erfindungsgemässen additionsvernetzenden Siliconkautschukmischungen können die üblichen weiteren an sich bekannten Bestandteile enthalten. Die Herstellung von cis-Dichlorobis(styrol)platin(II)ist an sich bekannt und beispielsweise in W.R. Caseri, Dissertation, ETH Zürich, 1988, beschrieben. Überraschend ist, dass cis-Dichlorobis(styrol)platin(II) als ausgewählter Platinkatalysator nicht nur die Additionsreaktion fördert, sondern - im Vergleich zu andern an sich bekannten Katalysatoren - ebenso die Haftungseigenschaften des ausgehärteten produktes erheblich verbessert. Eine Zusammensetzung, welche die im weiteren definierten Komponenten (a), (b) und (c) und gegebenenfalls (d) enthält, wobei das molare Verhältnis der im Gemisch anwesenden SiH-Gruppen zu den im Gemisch anwesenden an Si-gebundenen Alkenylgruppen mindestens 1,5, vorzugsweise etwa 1,5 bis 4,5 und vorzugsweise etwa 1,8 bis etwa 2,5 beträgt, im Zusammenhang mit den damit verbundenen ausgezeichneten Haftungseigenschaften, ist bis anhin nicht beschrieben worden. Besonders gute Resultate erhält man, wenn man die zu beschichtende Oberfläche vorgängig zur Beschichtung mit einem leicht ätzend wirkenden Entfettungsmittel behandelt, wie dies im weiteren für das Anwendungsverfahren der erfindungsgemässen Siliconkautschukmischung beschrieben ist.

Die vorliegende Erfindung ist in den Patentansprüchen formuliert. Die vorliegende Erfindung betrifft eine additionsvernetzende Siliccnkautschukmischung, vorzugsweise in flüssiger bis pastöser Form, welche mindestens die folgenden Bestandteile enthält:
(a) ein Alkenylgruppen enthaltendes cyclisches, lineares oder verzweigtes Organopolysiloxan mit durchschnittlich mindestens zwei Alkenylgruppen pro Molekül, mit einer Viskosität von 0,01 bis 30000 Pas;
(b) ein cyclisches, lineares oder verzweigtes, gegebenenfalls Dialkylsilyloxygruppen enthaltendes, Organohydrogenpolysiloxan, vorzugsweise mit durchschnittlich mindestens zwei SiH-Gruppen pro Molekül; und
(c) eine katalytisch wirksame Menge der Verbindung cis-Dichlorobis(styrol)platin(II), welche gegebenenfalls in einem geeigneten organischen Lösungsmittel aufgelöst wurde,
wobei das molare Verhältnis der im Gemisch anwesenden SiH-Gruppen zu den im Gemisch anwesenden an Si-gebundenen Alkenylgruppen mindestens 1,5, vorzugsweise etwa 1,5 bis 4,5 und vorzugsweise etwa 1,8 bis etwa 2,5 beträgt.

Die Verbindung cis-Dichlorobis(styrol)platin(II), welche erfindungsgemäss gleichzeitig Katalysator und Haftungsverbesserungsmittel ist, ist vorzugsweise in Mengen von 1 ppm bis 5000 ppm, und vorzugsweise 50 ppm bis 200 ppm, berechnet auf das Gewicht von Platin in der Platinverbindung pro Gewicht aller anwesenden Polysiloxanverbindungen bzw. bezogen auf das Gesamtgewicht der Komponenten (a) und (b). Als Lösungsmittel für die Komponente (c) sind beispielsweise Toluol, Leichtbenzin und vergleichbare Verbindungen geeignet.

Die erfindungsgemässe additionsvernetzende Siliconkautschukmischung kann gegebenenfalls weitere übliche an sich bekannte Bestandteile enthalten, insbesondere (d) mindestens eine oder mehrere Komplexverbindung aus der Gruppe der Rhodium-, Nickel-, Palladiumund Platinmetalle, wie solche als katalytisch wirksame Verbindungen für Additionsreaktionen zwischen SiH-Bindungen und Alkenylresten bekannt sind. Diese zusätzlich anwesenden Katalysatoren können die Reaktionsgeschwindigkeit der Additionsreaktion positiv beeinflussen. Erfindungswesentlich ist jedoch die Anwesenheit von cis-Dichlorobis(styrol)platin(II) in den bereits erwähnten Mengen, um die erfindungsgemässen ausgezeichneten Haftungseigenschaften zu erzielen.

Die erfindungsgemässe Mischung kann gegebenenfalls weitere übliche an sich bekannte Bestandteile enthalten, wie z.B.
(e) mindestens einen, gegebenenfalls oberflächenmodifizierten, Füllstoff oder ein Gemisch solcher Füllstoffe, wobei dieser Füllstoff oder das Gemisch der Füllstoffe vorzugsweise in einer Menge von 5 bis 200 Gewichtsteilen, bezogen auf 100 Gewichtsteile der Komponente (a) anwesend ist;
(f) mindestens einen Inhibitor oder ein Gemisch von Inhibitoren zur Stabilisierung der Mischung, enthaltend die Komponenten (a) und (b);
(g) weitere Hilfsstoffe, vorzugsweise Phenylsiliconöle, vorzugsweise in einer Menge von bis zu 10 Gewichtsteilen, vorzugsweise 0,05 bis 10 Gewichtsteilen, bezogen auf 100 Gewichtsteile der Komponente (a) um selbstschmierende Mischungen zu erhalten und/oder
(h) Farbpasten, vorzugsweise 10 bis 70 Gew.-% Pigmente enthaltende Siliconöle, in einer Menge von bis zu 10 Gewichtsteilen, bezogen auf 100 Gewichtsteile der Komponente (a).

Die vorliegende Erfindung betrifft im weiteren die Verwendung der erfindungsgemässen additionsvernetzenden Siliconkautschukmischungen zur Herstellung von Beschichtungen und Verbund-Formteilen.

Die vorliegende Erfindung betrifft im weiteren beschichtete Formteile und Verbund-Formteile, welche unter Verwendung der erfindungsgemässen additionsvernetzenden Siliconkautschukmischungen hergestellt wurden.

Die vorliegende Erfindung betrifft auch Verfahren zur Herstellung von Beschichtungen und Verbund-Formteilen unter Verwendung der erfindungsgemässen additionsvernetzenden Siliconkautschukmischungen, wie dies im weiteren beschrieben ist, sowie die derart hergestellten beschichtete Formteile und Verbund-Formteile.

Die vorliegende Erfindung betrifft im weiteren erfindungsgemässe additionsvernetzende Siliconkautschukmischungen, welche als Mehrkomponenten-Systeme, vorzugsweise als Zweikomponentensysteme ausgebildet sind, bzw. vorliegen.

Vorzugsweise enthält die erfindungsgemässe Siliconkautschukmischung mindestens einen, gegebenenfalls oberflächenmodifizierten, Füllstoff oder ein Gemisch solcher Füllstoffe [Komponente (e)]. In diesem Sinne betrifft die vorliegende Erfindung auch ein Verfahren zur Herstellung solcher additionsvernetzenden Siliconkautschukmischungen, wie dies im weiteren beschrieben ist.

Der Begriff "Organopolysiloxan mit durchschnittlich mindestens zwei Alkenylgruppen pro Molekül der Komponente (a)" umfasst erfindungsgemäss alle entsprechenden bisher in vernetzbaren Organopolysiloxanmassen eingesetzten an sich bekannten Polysiloxane. Vorzugsweise handelt es sich bei den Organopolysiloxanen der Komponente (a) um eine Verbindung, bzw. ein Verbindungsgemisch, der allgemeinen Formel (I): 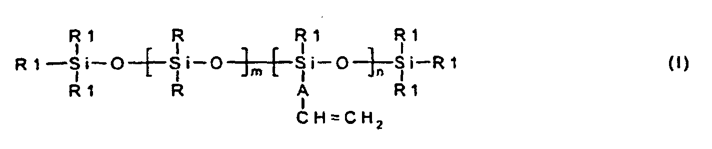 worin
- R: unabhängig voneinander einen Alkylrest mit 1 bis 8 Kohlenstoffatomen oder Phenyl, vorzugsweise Alkyl mit 1-4 Kohlenstoffatomen, vorzugsweise Methyl;
- R₁: unabhangig voneinander eine der Bedeutungen von R oder einen Rest -A-CH=CH₂;
- A: einen Rest -(CₛH₂ₛ)ₚ-, vorzugsweise -[(CH₂)ₛ]ₚ-, worin
- s: eine ganze Zahl von 1 bis 6, vorzugsweise 1;
- p: Null oder eins;
- m: durchschnittlich von Null bis 5000, vorzugsweise von 20 bis 5000, vorzugsweise 50 bis 1500;
- n: durchschnittlich von Null bis 100, vorzugsweise 2 bis 100, vorzugsweise 2 bis 20;
bedeuten, wobei die Verbindung, bzw. das Verbindungsgemisch, durchschnittlich mindestens zwei Reste -A-CH=CH₂ pro Molekül aufweist und die Gruppen -[Si(R)(R)O]- und -[Si(R₁)(A-CH=CH₂)O]- in beliebiger Reihenfolge im Molekül angeordnet sind.

Vorzugsweise bedeutet p = Null, so dass der Rest A entfällt, bzw. der Rest -A-CH=CH₂ Vinyl bedeutet. Vorzugsweise bedeuten die beiden endständigen Silyloxygruppen unabhängig voneinander Dimethylvinylsiloxy, wobei in diesem Fall n vorzugsweise Null bedeutet. In einer bevorzugten Ausführungsform weisen die erfindungsgemässen Organopolysiloxane der Komponente (a) Viskositäten im Bereich von 0,01 bis 500 Pas, und insbesondere im Bereich von 1 bis 100 Pas auf. Die angegebenen Viskositäten werden gemäss DIN 53 019 bei 20°C bestimmt. Die Summe von m + n liegt vorzugsweise durchschnittlich im Bereich von 20 bis 5000, vorzugsweise von 50 bis 1500.

Die Verbindung der Formel (I) stellt in der Regel ein Gemisch von Verbindungen der Formel (I) dar, was dem Fachmann bekannt ist. In diesem Sinn kann ein solches Gemisch auch Moleküle mit mehr als 100 [Si(R₁)(A-CH=CH₂)O]-Gruppen pro Molekül enthalten.

Die Komponente (b) enthält mindestens ein cyclisches, lineares oder verzweigtes Organohydrogenpolysiloxan mit vorzugsweise durchschnittlich mindestens zwei SiH-Gruppen pro Molekül. Vorzugsweise entspricht das Organohydrogenpolysiloxan der Komponente (b) einer Verbindung bzw. einem Verbindungsgemisch der allgemeinen Formel (II) : 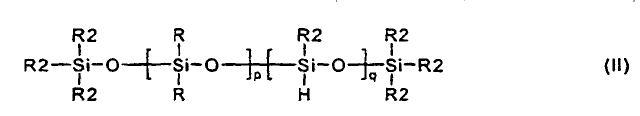 worin
- R: unabhängig voneinander einen Alkylrest mit 1 bis 8 Kohlenstoffatomen oder Phenyl, vorzugsweise Alkyl mit 1-4 Kohlenstoffatomen, vorzugsweise Methyl;
- R₂: unabhängig voneinander eine der Bedeutungen von R oder Wasserstoff;
- p: durchschnittlich von Null bis 5000, vorzugsweise von 20 bis 5000, vorzugsweise 50 bis 1500;
- q: durchschnittlich von Null bis 60, vorzugsweise 2 bis 60, vorzugsweise von 2 bis 30;
bedeuten, wobei die Verbindung, bzw. das Verbindungsgemisch, durchschnittlich mindestens zwei -SiH-Gruppen pro Molekül aufweist und die Gruppen -[Si(R)(R)O]- und -[SiH(R₂)]- in beliebiger Reihenfolge im Molekül angeordnet sind.

Vorzugsweise bedeuten die beiden endständigen Silyloxygruppen unabhängig voneinander Dimethylhydrogensiloxy, wobei für diesen Fall q Null bedeuten kann. Die Verbindung der Formel (II) stellt in der Regel ein Gemisch von Verbindungen der Formel (II) dar, was dem Fachmann bekannt ist. In diesem Sinn kann ein solches Gemisch auch Moleküle mit mehr als 60 -SiH(R₂)-Gruppen pro Molekül enthalten. Die Verbindung der Formel (II), bzw. das entsprechende Gemisch, weist vorzugsweise eine Viskosität im Bereich von 0,01 bis 5 Pas auf.

Ist oder enthält die Komponente (b) ein cyclisches Organohydrogenpolysiloxan, so ist dieses aus -[Si(R)(R)O]- und
-[SiH(R₂)]-Einheiten oder nur aus -[SiH(R₂)]-Einheiten zusammengesetzt, welche einen Ring bilden. Vorzugsweise hat ein solcher Ring 4 bis 8 solche Einheiten, vorzugsweise 4 solche Einheiten und entspricht vorzugsweise der Formel [-SiH(R₂)-]₄.

Das molare Verhältnis der in der Verbindung der Komponente (b) anwesenden SiH-Gruppen zu den in der Verbindung der Komponente (a) anwesenden an Si-gebundenen Alkenylgruppen beträgt erfindungsgemäss mindestens 1.5, vorzugsweise etwa 1,5 bis 4,5 und vorzugsweise etwa 1,8 bis etwa 2,5. Für den Fachmann ist die Auswahl der Komponenten und die Bestimmung der Mengenverhältnisse eine Frage der Optimierung.

Je nach der Herstellung können insbesondere die verzweigten Polysiloxane der Komponenten (a) und (b) bis zu 10 Molprozente, berechnet auf die anwesenden Si-Atome sowohl Alkoxy- als auch OH-Gruppen enthalten. Solche Verbindungen liegen innerhalb der vorliegenden Erfindung. Dasselbe gilt für die im weiteren beschriebenen Siliconpolymere, die in Form von in Lösungsmitteln gelösten Festharzen mit einem Festharzanteil, vorzugsweise im Bereich von 10 bis 80 Gew.-%, dem erfindungsgemässen Gemisch beigemischt werden können.

Die gegebenenfalls anwesende Komponente (d) besteht aus einem oder mehreren Komplexverbindungen aus der Gruppe der Rhodium-, Nickel-, Palladium- und Platinmetalle, wie solche als katalytisch wirksame Verbindungen für Additionsreaktionen zwischen SiH-Bindungen und Alkenylresten bekannt sind. Bevorzugt sind Pt (0)-Komplexe mit Alkenylsiloxanen als Liganden in katalytischen Mengen von vorzugsweise 1 bis 100 ppm Platin. Als Rh-Verbindungen sind ebenfalls die in J. Appl. Polym. Sci 30, 1837-1846 (1985) beschriebenen Verbindungen einsetzbar. Die Mengen an Rh-Katalysator betragen ebenfalls vorzugsweise 1 bis 100 ppm.

Füllstoffe (e) im Sinne der Erfindung sind vorzugsweise an sich bekannte verstärkend wirkende Füllstoffe, wie z.B. pyrogene oder gefällte Kieselsäure mit BET-Oberflächen zwischen 50 und 400 m²/g und/oder Extender-Füllstoffe, wie z.B. Quarzmehl, Diatomeenerden. Diese können in an sich bekannter Weise oberflächenmodifiziert sein. Vorzugsweise verwendet man diese Füllstoffe in Mengen von 10 bis 50 Gewichtsteilen, bezogen auf 100 Gewichtsteile der Komponente (a).

Die Oberflächenbehandlung der Füllstoffe kann auch in situ durch den Zusatz von Silazanen, wie Hexamethylsilazan und/oder Divinyltetramethyldisilazan sowie Vinylalkoxysilanen, wie z.B. Vinyltrimethoxysilan, und Wasser oder anderen gängigen Füllstoffbeladungsmitteln, wie z.B. Alkoxysilanen oder Siloxandiolen, in an sich bekannter Weise erfolgen.

Inhibitoren der Komponenete (f) zur Stabilisierung der erfindungsgemässen Mischung sind an sich bekannt. Beispiele für solche Inhibitoren sind z.B. Alkylole, wie 2-Methylbutinol(2) oder 1-Ethinylcyclohexanol in Mengen von 50 bis 10.000ppm.

In einer weiteren Ausführungsform der Erfindung enthält die Mischung weitere Hilfsstoffe (g), wie z.B. Phenylsilicone, insbesondere Phenylsiliconöle, welche selbstschmierende Vulkanisate ergeben, vorzugsweise in einer Menge von 0.05 bis 5 Gewichtsteilen, bezogen auf 100 Gewichtsteile der Komponente (a). Solche Phenylsilicone sind beispielsweise Copolymere enthaltend Dimethylsiloxy- und Diphenylsiloxy- und/oder Methylphenylsiloxygruppen sowie Polysiloxane mit Methylphenylsiloxygruppen mit einer Viskosität von vorzugsweise 0,1-10 Pas.

Die erfindungsgemässen Mischungen können auch Farbpasten (h) enthalten, wie z.B. 10 bis 70 Gew.-% Pigmente enthaltende Siliconöle, in einer Menge von 0.05 bis 10 Gewichtsteilen, vorzugsweise 0.05 bis 5 Gewichtsteile, bezogen auf 100 Gewichtsteile der Komponente (a). Solche Farbpasten sind an sich bekannt.

Vorzugsweise enthält die erfindungsgemässe Siliconkautschukmischungen mindestens einen, gegebenenfalls oberflächenmodifizierten, Füllstoff oder ein Gemisch solcher Füllstoffe [Komponente (e)]. In diesem Sinne betrifft die vorliegende Erfindung auch ein Verfahren zur Herstellung der erfindungsgemässen additionsvernetzenden Siliconkautschukmischung, welches dadurch gekennzeichnet ist, dass man mindestens ein Organopolysiloxan der Komponente (a) mit mindestens einem, gegebenenfalls oberflächenmodifizierten, vorzugsweise hydrophobierten, Füllstoff der Komponente(e) intensiv vermischt, und dem derart erhaltenen Gemisch anschliessend Organohydrogenpolysiloxan der Komponente (b), den Katalysator der Komponente (c),sowie gegebenenfalls weiteres Organopolysiloxan der Komponente (a), und weitere Zusatzstoffe der Komponenten (d) und (e) bis (h) hinzufügt. Das Vermischen erfolgt dabei vorzugsweise mit für hochviskose Materialien geeigneten Mischern, wie z.B. in einem Kneter, Dissolver oder Planetenmischer.

In einer bevorzugten Ausführungsform des erfindungsgemässen Verfahrens ist der Füllstoff (e) hydrophobiert, wobei die Hydrophobierung vorzugsweise *in situ* erfolgt.

Bei der *in situ* Hydrophobierung werden vorzugsweise das Organopolysiloxan der Komponente (a), der Füllstoff (e) und das Hydrophobierungsmittel, vorzugsweise Hexamethyldisilazan und/oder Divinyltetramethyldisilazan, vorzugsweise bei Temperaturen von 90-100°C, während mindestens 20 Minuten in einem für hochviskose Materialien geeigneten Mischaggregat, wie z.B. in einem Kneter, Dissolver oder Planetenmischer, gerührt und anschliessend bei einer Temperatur von etwa 150-160°C von überschüssigem Beladungsmittel und Wasser zunächst bei Normaldruck und dann im Vakuum bei einem Druck von 100 bis 20 mbar befreit. Die weiteren Komponenten, d.h. das Organohydrogenpolysiloxan der Komponente (b) und der Katalysator (c), sowie gegebenenfalls weitere Organopolysiloxane der Komponente (a), der Katalysator (d), der Inhibitor (f), der Hilfsstoff (g), und/oder die Farbpaste (h) werden anschliessend während 10 bis 30 Minuten eingemischt. Die Mischung wird dann auf das gewünschte Substrat aufgebracht und vernetzt.

Die vorliegende Erfindung betrifft im weiteren die erfindungsgemässe additionsvernetzende Siliconkautschukmischung in Form eines Zweikomponentensystems, wobei die eine (erste) Komponente mindestens ein Organopolysiloxan (a), den Katalysator (c) und gegebenenfalls den Katalysator (d), sowie gegebenenfalls den Füllstoff (e) und/oder Hilfsstoff (g) und die andere (zweite) Komponente mindestens ein Organopolysiloxan (a), mindestens ein Organohydrogenpolysiloxan der Komponente (b), und gegebenenfalls den Füllstoff (e), den Inhibitor (f), den Hilfsstoff (g) und die Farbpaste (h) enthält.

Es ist auch möglich, die einzelnen Komponenten in Mehrkomponentensysteme aufzuteilen, wie beispielsweise in ein Dreikomponentensystem. Die Aufteilung der Einzelmengen in die einzelnen Komponenten der Mehrkomponentensysteme hängt insbesondere von der Stabilität der einzelnen Komponenten ab. In diesem Sinne ist die Aufteilung eine Frage der Optimierung und für den Fachmann problemlos. Bei Verwendung eines erfindungsgemässen Mehrkomponentensystems werden die Komponenten erst kurz vor der Verwendung, vorzugsweise in einem Spritzgiessautomaten oder in einem vorgelagerten Mischkopf mit anschliessendem Statikmischer, zusammengeführt und gemischt. Für die erfindungsgemässen Verfahren sind alle gängigen Spritzgussautomaten einsetzbar.

Zu beschichtende Substratoberflächen werden regelmässig vor der Beschichtung bzw. vor der Verarbeitung zu Verbund-Formteilen mit oberflächenaktiven Mitteln sorgfältig von allfälligen Verunreinigungen, wie beispielsweise Fetten, gereinigt. Es hat sich überraschenderweise gezeigt, dass die Haftung der erfindungsgemässen Siliconkautschukmischung auf der Substratoberfläche sprunghaft zunimmt, wenn man diese vorgängig zur Beschichtung mit der erfindungsgemässen additionsvernetzenden Siliconkautschukmischung mit einem ätzend wirkenden oberflächenaktiven Mittel behandelt.

In diesem Sinne betrifft die vorliegende Erfindung ein Verfahren zur Beschichtung von Substratoberflächen sowie zur Herstellung von Verbund-Formteilen, welches dadurch gekennzeichnet ist, dass man die Substratoberflächen vorgängig zur Beschichtung mit einem ätzend wirkenden oberflächenaktiven Mittel bzw. Zusammensetzung behandelt und anschliessend mit der erfindungsgemässen additionsvernetzenden Siliconkautschukmischung beschichtet bzw. anschliessend die Substrate und/oder Substratkombinationen zusammenfügt, die erfindungsgemässe additionsvernetzende Siliconkautschukmischung in die Zwischenräume einbringt, und die Siliconkautschukmischung bei erhöhter Temperatur aushärtet bzw. vulkanisiert.

Die Substratoberflächen bestehen vorzugsweise aus Metall, Glas, Keramik und/oder Kunststoff. Bevorzugte Metalle sind Aluminium, Alumininiumlegierungen, wie an sich bekannte AlMgSi-Legierungen, Chromnickel-Stahl oder Messing.

Für die Behandlung mit einer ätzend wirkenden oberflächenaktiven Zusammensetzung, bzw. einem Mittel, verwendet man vorzugsweise ein ätzend wirkendes wässriges Entfettungsmittel, welches für die Behandlung von Buntmetallen, Chromstahl, Glas oder Keramik geeignet ist. Vorzugsweise wirkt dieses nur leicht ätzend und ist sauer oder basisch. Vorzugsweise ist dies eine saure oberflächenaktive Zusammensetzung. Vorzugsweise liegt der Säurewert dieses Mittels (als wässriges Konzentrat) im sauren pH-Bereich bei etwa pH 5.0 bis 6.5, vorzugsweise bei etwa 5.5 bis 6.2. Für die Behandlung der Substratoberflächen wird dieses Konzentrat in solcher Menge mit Wasser vermischt, dass der Säurewert (pH-Wert) der Behandlungslösung etwa 5.5 bis 6.8, vorzugsweise etwa 6.0 bis 6.6, beträgt, wobei im Tauchverfahren, vorzugsweise mit Ultraschallunterstützung, gearbeitet wird. Dabei beträgt die Arbeitstemperatur etwa 50-60°C und die Bearbeitungszeit etwa 0.5-10 Minuten, vorzugsweise etwa 2-6 Minuten.

Das Mittel kann mehrere Komponenten enthalten, so dass die oberflächenaktive Wirkung einerseits und die ätzende Wirkung andererseits auf verschiedene Komponenten bzw. Verbindungen zurückgeführt werden kann. In diesem Sinne enthält das Mittel insbesondere (i) mindestens eine an sich bekannte oberflächenaktive Verbindung (Tensid) oder eine Mischung solcher oberflächenaktiven Verbindungen sowie (ii) mindestens eine wasserlösliche anorganische oder organische Saure oder ein entsprechendes sauer wirkendes Salz, oder eine Kombination solcher Säuren und/oder Salze, jeweils in einer Konzentration, welche einen Säurewert der wässrigen Lösung im Bereich der oben genannten Werte ergibt.

Als oberflachenaktive Verbindung (Tensid) kommen im Prinzip alle an sich bekannten oberflächenaktiven Verbindungen (Tenside) in Frage, welche in Reinigungsmitteln verwendet werden. Die oberflächenaktive Verbindung kann ionisch oder nicht-ionisch sein und soll bei den Behandlungsbedingungen, d.i. bei leicht erhöhter Temperatur und bei leicht sauren pH-Werten, chemisch beständig sein. Bevorzugt sind z.B. Fettsauren, Fettalkohole mit jeweils vorzugsweise 6 bis 22 C-Atomen und deren Derivate, wie z.B. alkoxylierte Fettsäuren oder Fettalkohole, vorzugsweise ethoxylierte Fettalkohole.

Als anorganische Säuren und Salze kommen insbesondere Fluoride oder Sulfate, vorzugsweise Fluoride, wie z.B. Natriumfluorid, Kaliumfluorid und/oder Ammoniumfluorid in Frage. Das Mittel kann gegebenenfalls eine oder mehrere anorganische Säuren in geringen Mengen enthalten, wie beispielsweise wenig Schwefelsäure oder Fluorwasserstoffsäure, so dass der Säurewert des Mittels als wässriges Konzentrat im pH-Bereich von etwa pH 5.0 bis 6.5 liegt.

Als organische Säure kommen vorzugsweise gesättigte oder ungesättigte organische alifatische Säuren, insbesondere mehrwertige Säuren, d.h. Säuren mit mehreren Carboxylgruppen pro Molekül, wie Apfelsäure, Zitronensäure, Weinsäure, Bernsteinsäure, Oxalbernsteinsäure und verwandte Säuren sowie aromatische Carbonsäuren, wie Benzoesäure, Phthalsäure und verwandte Säuren, vorzugsweise Benzoesäure, in Frage. Ebenso können hydroxylhaltige Säuren wie beispielsweise Gluconsäure und verwandte Säuren, vorzugsweise in Kombination mit einer der genannten organische Säuren, verwendet werden.

Bevorzugt ist eine Zusammensetzung, welche als oberflächenaktive Komponente einen ethoxylierten Fettalkohol oder ein Gemisch ethoxylierter Fettalkohole und als ätzend wirkende Komponente eine organische Säure, vorzugsweise Benzoesäure, Äpfelsäure, Zitronensäure oder Weinsäure, vorzugsweise eine Kombination von Benzoesäure und Citronensäure, und gegebenenfalls Gluconsäure, enthält. Das Gemisch kann als Vorkonzentrat vorliegen und jeweils für eine bestimmte Verwendung auf die geeignete Konzentration verdünnt werden. Ein solches Vorkonzentrat kann zwischen 10 und 15% Feststoffgehalt aufweisen und derart verdünnt werden, dass der gewünschte pH-Wert der Behandlungslösung entsteht. Die Optimierung der einzelnen Komponenten ist für den Fachmann problemlos.

Ein geeignetes oberflächenaktives Mittel bzw. Reinigungsmittel und Entfettungsmittel, enthaltend Benzoesäure, Citronensäure und Gluconsäure, für die Durchführung der vorliegenden Erfindung ist beispielsweise von der Firma PRELIT AG, Chemische Werke, CH-5608 Stetten/Schweiz, unter der Marke PRELIT™ LP156 kommerziell erhältlich.

In den folgenden Beispielen bedeuten alle angegebenen Teile jeweils Gewichtsteile. Die Beispiele erläutern die Erfindung ohne diese zu beschränken.

Die Haftung der ausgehärteten Siliconkautschukmischungen auf verschiedenen Substraten wurde analog zu DIN 53 289 (Rollenschälversuch) mit jeweils zwei Probekörpern bei einer Zuggeschwindigkeit von 100 mm/min geprüft.

### Beispiel 1:

Die in Tabelle 1 (Beispiel 1) angegebenen Mischungen wurden zur Bestimmung der Haftfestigkeiten auf den verschiedenen Substratuntergründen aufvulkanisert.
a) Die zu beschichtenden Substrate wurden während 5 Minuten in einem 60°C warmen Reinigungsbad aus entionisiertem Wasser enthaltend 5 Gew.-% des Reinigungsmittels PRELITIN™ LP 156 der Firma PRELIT AG, Chemische Werke, CH-5608 Stetten/Schweiz, während 3 Minuten bei pH 6.3 ± 0.3 behandelt und anschliessend während 10 Minuten bei 80°C in einem Wärmeschrank getrocknet.
b) Die Zusammenmischung der einzelnen Komponenten der Siliconkautschukmischungen erfolgte während 5 Minuten mittels eines dynamischen Mischers mit 300 U/min. Anschliessend wurde die Mischung während 5 Minuten bei Drücken von < 40 mbar evakuiert, bevor eine Schicht auf die verschiedenen Substrate aufgebracht wurde. Die Härtung bzw. Vulkanisation erfolgte bei 180°C während einer Stunde.

In den Versuchen (Vergleichsversuche), welche kein cis-Dichlorobis(styrol)platin(II) enthalten, sind die üblichen Katalysatoren anwesend.

**Tabelle 1**

| Ver. Nr. | Grund-Komponente * [Gew.%] | Zusatzkomponente ** [Gew.%] | Zusatzkomponente *** [Gew.%] | Katalysator **** [Gew.%] | Substrat | Haftfestigkeit [N/mm] |
|---|---|---|---|---|---|---|
| 1 | 100 | 3 | - | 5 | AlMgSil (Al-Knetleg.) | 4-5 - K |
| 2 | 100 | - | 0,3 | 3 | AlMgSil (Al-Knetleg.) | 3-4 - K |
| 3 | 100 | - | - | - | AlMgSil (Al-Knetleg.) | < 0,5 - A |
| 4 | 100 | 3 | - | 5 | Glasplatte (Fensterglas) | 4-5 - K |
| 5 | 100 | - | 0,3 | 3 | Glasplatte (Fensterglas) | 4-5 - K |
| 6 | 100 | - | - | - | Glasplatte (Fensterglas) | < 0,5 - A |
| 7 | 100 | 3 | - | 5 | Messing | 4-5 - K |
| 8 | 100 | - | 0,3 | 3 | Messing | 3-4 - K |
| 9 | 100 | - | - | - | Messing | < 0,5 - A |
| 10 | 100 | 3 | - | 5 | Stahl St-37 | 4-5 - K |
| 11 | 100 | - | 0,3 | 3 | Stahl St-37 | 2-3 - M |
| 12 | 100 | - | - | - | Stchl St-37 | < 0,5 - A |
| 13 | 100 | 3 | - | 5 | Chromnickel Stahl 18-8 | 4-5 - K |
| 14 | 100 | - | 0,3 | 3 | Chromnickel Stahl 18-8 | 3-4 - K |
| 15 | 100 | - | - | - | Chromnickel Stahl 18-8 | < 0,3 - A |
| 16 | 100 | 3 | - | 5 | Epoxidharz Glasfaser verstärkt | 4-5 - K |
| 17 | 100 | - | 0,3 | 3 | Epoxidharz Glasfaser verstärkt | 4-5 - K |
| 16 | 100 | - | - | - | Epoxidharz Glasfaser verstärkt | < 0.5 - A |
| 19 | 100 | 3 | - | 5 | Polyimid (Capton®) | 4-5 - K |
| 20 | 100 | - | - | - | Polyimid (Capton®) | < 0,5 - A |

| | | | | | | |
|---|---|---|---|---|---|---|
| * (Grundkomponente) Additionsvernetzender Zweikomponenten Flüssigsiliconkautschuk, Typ Silopren LSR 2530, Bezugsquelle: GE-Bayer Silicones GmbH und Co. KG, Deutschland, Viskosität: 60 Pas, Mischungsverhältnis der Komponenten (a) und (b) = 1, Verhältnis SiH:Si-Vinyl = 1.8 | | | | | | |
| ** Methylhydrosiloxan - Dimethylsiloxan Copolymer, Typ HMS-301, Bezugsquelle: ABCR GmbH & Co. KG, Deutschland, Molekulargewicht = 1900-2000, Anteil an(CH₃HSiO) = 25 - 30 Mol-%. | | | | | | |
| *** Methylhydrosiloxan, Typ: Eaysilone Öl MH15, Bezugsquelle: GE-Bayer Silicones GmbH und Co. KG, Deutschland, Viskosität: ca. 15 cSt (bei 25°C), ca. 40 [SiH(O)(CH₃)]-Einheiten pro Molekül, mit endständigen [Si(CH₃)₃]-Einheiten. | | | | | | |
| **** 0,5 Gew.-%ige Lösung von cis-Dichlorobis(styrol)platin(II) in Toluol. Die Gew.-Teile in der Tabelle 1 beziehen sich auf das trockene Platingewicht. K = Kohäsionsbruch A = Adhäsionsbruch M = Mischbruch | | | | | | |

### Beispiel 2:

In Tabelle 2 (Beispiel 2) wird eine Klebung aus einem erfindungsgemässen additionsvernetzenden Siliconkautschuk hergestellt.
a) Die Substrate werden gemäss Beispiel 1, Absatz a) vorbehandelt.
b) Der additionsvernetzende Siliconkautschuk wird analog zu Beispiel 1, Absatz b) bzw. gemäss der in Tabelle 2 angegebenen Zusammensetzung hergestellt und zur Herstellung eines Bauteils bzw. zum Verkleben der entsprechenden Substrate verwendet. Die Ermittlung der Zugscherfestigkeiten erfolgte nach DIN EN 1465.

**Tabelle 2**

| Ver. Nr. | Grund-Komponente * [Gew.%] | Zusatzkomponente ** [Gew.%] | Katalysator **** [Gew.%] | Substrat Kombination | Zuscherfestigkeit [MPa] |
|---|---|---|---|---|---|
| 1 | 100 | 3 | 5 | AlMgSil (Al-Knetleg.) verklebt mit AlMgSil (Al-Knetleg.) | 2.6 -K |
| 2 | 100 | - | - | AlMgSil (Al-Knetleg.) verklebt mit AlMgSil (Al-Knetleg.) | < 0,2 - A |
| 3 | 100 | 3 | 5 | AlMgSil (Al-Knetleg.) verklebt mit Glasfaser verstärktes Epoxidharz | 2.8 - K |
| 4 | 100 | - | - | AlMgSil (Al-Knetleg.) verklebt mit Glasfaser verstärktes Epoxidharz | < 0,2 - A |
| 5 | 100 | 3 | 5 | Glasfaser verstärktes Epoxidharz verklebt mit Glasfaser verstärktes Epoxidharz | 2.1 - K |
| 6 | 100 | - | - | Glasfaser verstärktes Epoxidharz verklebt mit Glasfaser verstärktes Epoxidharz | <0,2 - A |
| 7 | 100 | 3 | 5 | Glas verklebt mit Glas | 2.4 - K |
| 8 | 100 | - | - | Glas verklebt mit Glas | <0,2 - A |

| | | | | | |
|---|---|---|---|---|---|
| * (Grundkomponente), dieselbe wie in Beispiel 1 | | | | | |
| ** Methylhydrosiloxan - Dimethylsiloxan Copolymer, dieselbe Verbindung wie in Beispiel 1 | | | | | |
| **** 0,5 Gew.-%ige Lösung von cis-Dichlorobis(styrol)platin(II) in Toluol. Die Gew.-Teile in der Tabelle 1 beziehen sich auf das trockene Platingewicht. K = Kohäsionsbruch A = Adhäsionsbruch M = Mischbruch | | | | | |

## Patentansprüche

1. Verfahren zur Beschichtung von Substratoberflächen sowie zur Herstellung von Verbund-Formteilen, indem man die Substratoberflächen mit einer ausgewählten additionsvernetzenden Siliconkautschukmischung beschichtet bzw. die Substrate und/oder Substratkombinationen zusammenfügt und die additionsvernetzende Siliconkautschukmischung in die Zwischenräume einbringt und anschliessend bei erhöhter Temperatur aushärtet, **dadurch gekennzeichnet, dass** man (i) die Substratoberflächen vorgängig zur Beschichtung mit einer ätzend wirkenden oberflächenaktiven wässerigen Zusammensetzung mit einem Säurewert (pH-Wert) von etwa 5,5 bis 6,8 behandelt, und (ii) anschliessend die trockene Substratoberflächen mit einer in flüssiger bis pastöser Form vorliegenden Siliconkautschukmischung beschichtet, welche mindestens die folgenden Bestandteile enthält:
(a) ein Alkenylgruppen enthaltendes cyclisches, lineares oder verzweigtes Organopolysiloxan mit durchschnittlich mindestens zwei Alkenylgruppen pro Molekül, mit einer Viskosität von 0,01 bis 30000 Pas;
(b) ein cyclisches, lineares oder verzweigtes, gegebenenfalls Dialkylsilyloxygruppen enthaltendes, Organohydrogenpolysiloxan, vorzugsweise mit durchschnittlich mindestens zwei SiH-Gruppen pro Molekül; und
(c) eine katalytisch wirksame Menge der Verbindung cis-Dichlorobis(styrol)platin(II), welche gegebenenfalls in einem geeigneten organischen Lösungsmittel aufgelöst wurde,
wobei das molare Verhältnis der im Gemisch anwesenden SiH-Gruppen zu den im Gemisch anwesenden an Si-gebundenen Alkenylgruppen mindestens 1.5, vorzugsweise etwa 1,5 bis 4,5 und vorzugsweise etwa 1,8 bis etwa 2,5 beträgt.

2. Verfahren nach Anspruch 1, **dadurch gekennzeichnet, dass** die Siliconkautschukmischung die Verbindung cis-Dichlorobis(styrol)-platin(II) in Mengen von 1 ppm bis 5000 ppm, und vorzugsweise 50 ppm bis 200 ppm, berechnet auf das Gewicht von Platin in der Platinverbindung bezogen auf das Gesamtgewicht der Komponenten (a) und (b) enthält.

3. Verfahren nach Anspruch 1 oder 2, **dadurch gekennzeichnet, dass** die Siliconkautschukmischung weitere übliche an sich bekannte Bestandteile enthält, vorzugsweise
(d) mindestens eine oder mehrere Komplexverbindung aus der Gruppe der Rhodium-, Nickel-, Palladium- und Platinmetalle, wie solche als katalytisch wirksame Verbindungen für Additionsreaktionen zwischen SiH-Bindungen und Alkenylresten verwendet werden, und/oder
(e) mindestens einen, gegebenenfalls oberflächenmodifizierten, Füllstoff oder ein Gemisch solcher Füllstoffe, wobei dieser Füllstoff oder das Gemisch der Füllstoffe vorzugsweise in einer Menge von 5 bis 200 Gewichtsteilen, bezogen auf 100 Gewichtsteile der Komponente (a) anwesend ist; und/oder
(f) mindestens einen Inhibitor oder ein Gemisch von Inhibitoren zur Stabilisierung der Mischung, enthaltend die Komponenten (a) und. (b), und/oder
(g) weitere Hilfsstoffe, vorzugsweise Phenylsiliconöle, vorzugsweise in einer Menge von bis zu 10 Gewichtsteilen, vorzugsweise 0,05 bis 10 Gewichtsteilen, bezogen auf 100 Gewichtsteile der Komponente (a), und/oder
(h) Farbpasten, vorzugsweise 10 bis 70 Gew.-% Pigmente enthaltende Siliconöle, in einer Menge von bis zu 10 Gewichtsteilen, bezogen auf 100 Gewichtsteile der Komponente (a).

4. Verfahren nach einem der Ansprüche 1-3, **dadurch gekennzeichnet, dass** das Organopolysiloxan der Komponente (a) eine Verbindung, bzw. ein Verbindungsgemisch, der allgemeinen Formel (I) darstellt: 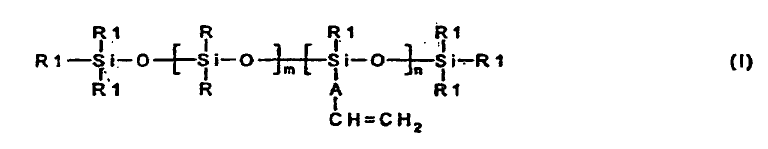 worin
R unabhängig voneinander einen Alkylrest mit 1 bis 8 Kohlenstoffatomen oder Phenyl, vorzugsweise Alkyl mit 1-4 Kohlenstoffatomen, vorzugsweise, vorzugsweise Methyl;
R₁ unabhängig voneinander eine der Bedeutungen von R oder einen Rest -A-CH=CH₂;
A einen Rest -(CₛH₂ₛ)ₚ- , vorzugsweise -[(CH₂)ₛ]ₚ- , worin
s eine ganze Zahl von 1 bis 6, vorzugsweise 1;
p Null oder eins;
m durchschnittlich von Null bis 5000, vorzugsweise von 20 bis 5000, vorzugsweise 50 bis 1500;
n durchschnittlich von Null bis 100, vorzugsweise 2 bis 100, vorzugsweise 2 bis 20;
bedeuten, wobei die Verbindung, bzw. das Verbindungsgemisch, durchschnittlich mindestens zwei Reste -A-CH=CH₂ pro Molekül aufweist und die Gruppen -[Si(R)(R)O]- und -[Si(R₁)(A-CH=CH₂)O]- in beliebiger Reihenfolge im Molekül angeordnet sind.

5. Verfahren nach Anspruch 4, **dadurch gekennzeichnet, dass** p = Null bedeutet, bzw. der Rest -A-CH=CH₂ Vinyl bedeutet.

6. Verfahren nach Anspruch 4, **dadurch gekennzeichnet, dass** die beiden endständigen Silyloxygruppen in der Verbindung bzw. im Verbindungsgemisch der allgemeinen Formel (I) unabhängig voneinander Dimethylvinylsiloxy bedeuten und die Verbindung bzw. das Verbindungsgemisch der allgemeinen Formel (I) vorzugsweise eine Viskosität im Bereich von 0,01 bis 500 Pas, insbesondere im Bereich von 1 bis 100 Pas aufweist.

7. Verfahren nach einem der Ansprüche 1-6, **dadurch gekennzeichnet, dass** das Organohydrogenpolysilox der Komponente (b) einer Verbindung bzw. einem Verbindungsgemisch der allgemeinen Formel (II) entspricht: 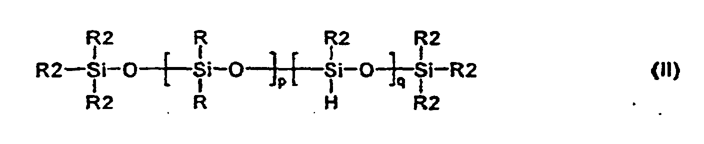 worin
R unabhängig voneinander einen Alkylrest mit 1 bis 8 Kohlenstoffatomen oder Phenyl, vorzugsweise Alkyl mit 1-4 Kohlenstoffatomen, vorzugsweise Methyl;
R₂ unabhängig voneinander eine der Bedeutungen von R oder Wasserstoff;
p durchschnittlich von Null bis 5000, vorzugsweise von 20 bis 5000, vorzugsweise 50 bis 1500;
q durchschnittlich von Null bis 60, vorzugsweise 2 bis 60, vorzugsweise von 2 bis 30;
bedeuten, wobei die Verbindung, bzw. das Verbindungsgemisch, durchschnittlich mindestens zwei -SiH-Gruppen pro Molekül aufweist und die Gruppen -[Si(R)(R)O]- und -[SiH(R₂)]- in beliebiger Reihenfolge im Molekül angeordnet sind.

8. Verfahren nach Anspruch 7, **dadurch gekennzeichnet, dass** die beiden endständigen Silyloxygruppen in der Verbindung bzw. im Verbindungsgemisch der allgemeinen Formel (II) unabhängig voneinander Dimethylhydrogensiloxy bedeuten und die Verbindung der Formel (II) bzw. das entsprechende Gemisch vorzugsweise eine Viskosität im Bereich von 0,01 bis 5 Pas aufweist.

9. Verfahren nach einem der Ansprüche 1-8, **dadurch gekennzeichnet, dass** die Komponente (b) ein cyclisches Organohydrogenpolysiloxan darstellt, welches aus -[Si(R)(R)O]- und -[SiH(R₂)]-Einheiten oder nur aus -[SiH(R₂)]-Einheiten zusammengesetzt ist und cyclisches Organohydrogenpolysiloxan vorzugsweise 4 bis 8 solcher Einheiten, vorzugsweise 4 solcher Einheiten aufweist und vorzugsweise der Formel [-SiH(R₂)-]₄ entspricht.

10. Verfahren nach einem der Ansprüche 1-9, **dadurch gekennzeichnet, dass** die Siliconkautschukmischung mindestens einen, gegebenenfalls oberflächenmodifizierten, Füllstoff enthält, vorzugsweise pyrogene oder gefällte Kieselsäure mit einer BET-Oberfläche zwischen 50 und 400 m²/g und/oder einen Extender-Füllstoffe, vorzugsweise Quarzmehl und/oder Diatomeenerden.

11. Verfahren nach einem der Ansprüche 1-10, **dadurch gekennzeichnet, dass** die Substratoberflächen aus Metall, Glas, Keramik und/oder Kunststoff, vorzugsweise aus Metall, Glas und/oder Keramik, vorzugsweise aus Aluminium, Alumininiumlegierungen, Chromnickel-Stahl, Messing, Glas und/oder Keramik bestehen.

12. Verfahren nach einem der Ansprüche 1-11, **dadurch gekennzeichnet, dass** die, das ätzend wirkende Mittel enthaltende, wässrige Behandlungslösung einen Säurewert (pH-Wert) von etwa 6.0 bis 6.6 aufweist, wobei im Tauchverfahren, vorzugsweise mit Ultraschallunterstützung, bei einer Arbeitstemperatur etwa 50-60°C gearbeitet wird.

13. Verfahren nach einem der Ansprüche 1-12, **dadurch gekennzeichnet, dass** die ätzend wirkende Zusammensetzung (i) mindestens eine oberflächenaktive Verbindung oder eine Mischung solcher oberflächenaktiven Verbindungen sowie (ii) mindestens eine wasserlösliche anorganische oder organische Saure oder ein entsprechendes sauer wirkendes Salz, oder eine Kombination solcher Säuren und/oder Salze enthält.

14. Verfahren nach Anspruch 13, **dadurch gekennzeichnet, dass** die oberflächenaktive Verbindung bei leicht erhöhter Temperatur und bei leicht sauren pH-Werten chemisch beständig ist und vorzugsweise eine Fettsäure, einen Fettalkohol oder ein Derivat derselben, vorzugsweise eine alkoxylierte Fettsäure oder einen alkoxylierten Fettalkohol, vorzugsweise einen ethoxylierten Fettalkohol darstellt.

15. Verfahren nach Anspruch 13, **dadurch gekennzeichnet, dass** die anorganische Säure und/oder das anorganische Salz ein Fluorid oder Sulfat, vorzugsweise ein Fluorid, vorzugsweise Natriumfluorid, Kaliumfluorid und/oder Ammoniumfluorid darstellt und die Zusammensetzung gegebenenfalls eine oder mehrere anorganische Säuren in geringen Mengen enthält, so dass der Säurewert des Mittels als wässriges Konzentrat im pH-Bereich von etwa pH 5.0 bis 6.5 liegt.

16. Verfahren nach Anspruch 14, **dadurch gekennzeichnet, dass** die organische Säure eine gesättigte oder ungesättigte gegebenenfalls hydroxylhaltige, alifatische Säure, vorzugsweise eine mehrwertige Säure, oder eine aromatische Carbonsäure; vorzugsweise Äpfelsäure, Zitronensäure, Weinsäure, Bernsteinsaure, Oxalbernsteinsäure, Gluconsäure, Benzoesäure, Phthalsäure oder eine verwandte Säure, darstellt.

17. Verfahren nach einem der Ansprüche 13-16, **dadurch gekennzeichnet, dass** die Zusammensetzung einen ethoxylierten Fettalkohol oder ein Gemisch ethoxylierter Fettalkohole sowie eine organische Säure, vorzugsweise Benzoesäure, Äpfelsäure, Zitronensäure und/oder Weinsäure, vorzugsweise eine Kombination von Benzoesäure und Citronensäure, und gegebenenfalls Gluconsäure, enthält.

18. Verfahren nach einem der Ansprüche 3-10, **dadurch gekennzeichnet, dass** zur Herstellung der Siliconkautschukmischung man mindestens ein Organopolysiloxan der Komponente (a) mit mindestens einem, gegebenenfalls oberflächenmodifizierten, vorzugsweise hydrophobierten, Füllstoff der Komponente(e) intensiv vermischt, und dem derart erhaltenen Gemisch anschliessend Organohydrogenpolysiloxan der Komponente (b), den Katalysator der Komponente (c), sowie gegebenenfalls weiteres Organopolysiloxan der Komponente (a), und weitere Zusatzstoffe der Komponenten (d) und (e) bis (h) hinzufügt.

19. Beschichtete Formteile und Verbund-Formteile, welche unter Verwendung eines Verfahrens nach einem der Ansprüche 1-18 hergestellt wurden.

## Claims

1. Process for coating substrate surfaces and for producing shaped composites, by coating the substrate surfaces with a selected addition-crosslinking silicone rubber mixture or placing together the substrates and/or substrate combinations and introducing the addition-crosslinking silicone rubber mixture into the intermediate spaces and subsequently curing the silicone rubber mixture at elevated temperature, **characterized in that** (i) the substrate surfaces are treated with a surface-active aqueous composition having an acidity (pH) of from about 5.5 to 6.8 and having a corrosive action prior to coating and (ii) the dry substrate surfaces are subsequently coated with a liquid to paste-like silicone rubber mixture which comprises at least the following constituents:
(a) a cyclic, linear or branched organopolysiloxane which contains on average at least two alkenyl groups per molecule and has a viscosity of from 0.01 to 30,000 Pas;
(b) a cyclic, linear or branched organohydrogenpolysiloxane which may contain dialkylsilyloxy groups and preferably has on average at least two SiH groups per molecule; and
(c) a catalytically effective amount of the compound cis-dichlorobis(styrene)platinum(II), which may have been dissolved in a suitable organic solvent,
where the molar ratio of the SiH groups present in the mixture to the Si-bonded alkenyl groups present in the mixture is at least 1.5, preferably from about 1.5 to 4.5 and more preferably from about 1.8 to about 2.5.

2. Process according to Claim 1, **characterized in that** the silicone rubber mixture contains from 1 ppm to 5000 ppm, preferably from 50 ppm to 200 ppm, of the compound cis-dichlorobis(styrene)platinum(II), calculated as the weight of platinum in the platinum compound divided by the total weight of the component (a) and (b).

3. Process according to Claim 1 or 2, **characterized in that** the silicone rubber mixture further comprises additional customary constituents known per se, preferably
(d) at least one complex of a metal selected from the group consisting of rhodium, nickel, palladium and platinum, for example complexes which are used as catalytically active compounds for addition reactions between SiH bonds and alkenyl radicals, and/or
(e) at least one filler which may have been surface-modified or a mixture of such fillers, with this filler or the mixture of fillers preferably being present in an amount of from 5 to 200 parts by weight per 100 parts by weight of the component (a); and/or
(f) at least one inhibitor or a mixture of inhibitors for stabilizing the mixture comprising the components (a) and (b), and/or
(g) further auxiliaries, preferably phenylsilicone oils, preferably in an amount of up to 10 parts by weight, more preferably from 0.05 to 10 parts by weight, per 100 parts by weight of the component (a), and/or
(h) colorant pastes, preferably silicone oils containing from 10 to 70% by weight of pigments, in an amount of up to 10 parts by weight per 100 parts by weight of the component (a).

4. Process according to any of Claims 1-3, **characterized in that** the organopolysiloxane of the component (a) is preferably a compound or a mixture of compounds of the formula (I): 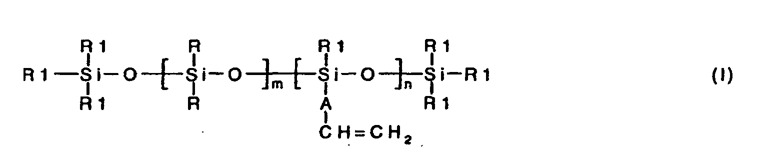 where
R are each, independently of one another, an alkyl radical having from 1 to 8 carbon atoms or phenyl, preferably alkyl having 1-4 carbon atoms, more preferably methyl;
R₁ each have, independently of one another, one of the meanings of R or can be a radical -A-CH=CH₂;
A is a radical -(CₛH₂ₛ)ₚ- , preferably -[(CH₂)ₛ]ₚ- , where
s is an integer from 1 to 6, preferably 1;
p is zero or one;
m is on average from zero to 5000, preferably from 20 to 5000, more preferably from 50 to 1500;
n is on average from zero to 100, preferably from 2 to 100, more preferably from 2 to 20,
where the compound or the mixture of compounds has on average at least two radicals -A-CH=CH₂ per molecule and the groups -[Si(R)(R)O]- and -[Si(R₁)(A-CH=CH₂)O]- are present in any order in the molecule.

5. Process according to Claim 4, **characterized in that** p = zero or the radical -A-CH=CH₂ is vinyl.

6. Process according to Claim 4, **characterized in that** the two terminal silyloxy groups in the compound or mixture of compounds of the formula (I) are, independently of one another, dimethylvinylsiloxy and the compound or the mixture of compounds or the formula (I) preferably has a viscosity in the range from 0.01 to 500 Pas, in particular in the range from 1 to 100 Pas.

7. Process according to any of Claims 1-6, **characterized in that** the organohydrogenpolysiloxane of the component (b) is a compound or a mixture of compounds of the formula (II): 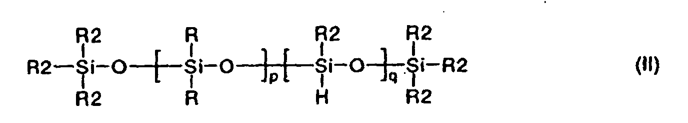 where
R are each, independently of one another, an alkyl radical having from 1 to 8 carbon atoms or phenyl, preferably alkyl having 1-4 carbon atoms, more preferably methyl;
R₂ each have, independently of one another, one of the meanings of R or can be hydrogen;
p is on average from zero to 5000, preferably from 20 to 5000, more preferably from 50 to 1500;
q is on average from zero to 60, preferably from 2 to 60, more preferably from 2 to 30,
where the compound or the mixture of compounds has on average at least two -SiH groups per molecule and the groups -[Si(R)(R)O]- and -[SiH(R₂)]- are present in any order in the molecule.

8. Process according to Claim 7, **characterized in that** the two terminal silyloxy groups in the compound or mixture of compounds of the formula (II) are, independently of one another, dimethylhydrogensiloxy and the compound of the formula (II) or the corresponding mixture preferably has a viscosity in the range from 0.01 to 5 Pas.

9. Process according to any of Claims 1-8, **characterized in that** the component (b) is a cyclic organohydrogenpolysiloxane which is composed of -[Si(R)(R)O]- and
-[SiH(R₂)]- units or only of -[SiH(R₂)]- units and preferably contains from 4 to 8 such units, more preferably 4 such units and preferably has the formula [-SiH(R₂)-]₄.

10. Process according to any of Claims 1-9, **characterized in that** the silicone rubber mixture comprises at least one filler which may, if desired, have been surface-modified, preferably pyrogenic or precipitated silica having a BET surface area of from 50 to 400 m²/g, and/or an extender filler, preferably quartz flour and/or diatomaceous earth.

11. Process according to any of Claims 1-10, **characterized in that** the substrate surfaces comprise metal, glass, ceramic and/or plastic, preferably metal, glass and/or ceramic, more preferably aluminum, an aluminum alloy, chromium-nickel steel, brass, glass and/or ceramic.

12. Process according to any of Claims 1-11, **characterized in that** the aqueous treatment solution comprising the agent having a corrosive action has an acidity (pH) of from about 6.0 to 6.6, and the treatment is carried out by dipping, preferably aided by ultrasound, at a working temperature of about 50-60°C.

13. Process according to any of Claims 1-12, **characterized in that** the composition having a corrosive action comprises (i) at least one surface-active compound or a mixture of such surface-active compounds and (ii) at least one water-soluble inorganic or organic acid or a corresponding acidic salt or a combination of such acids and/or salts.

14. Process according to Claim 13, **characterized in that** the surface-active compound is chemically stable at slightly elevated temperature and at slightly acidic pH values and is preferably a fatty acid, a fatty alcohol or a derivative thereof, more preferably an alkoxylated fatty acid or an alkoxylated fatty alcohol, particularly preferably an ethoxylated fatty alcohol.

15. Process according to Claim 13, **characterized in that** the inorganic acid and/or the inorganic salt is a fluoride or sulfate, preferably a fluoride, more preferably sodium fluoride, potassium fluoride and/or ammonium fluoride, and the composition may contain small amounts of one or more inorganic acids so that the acidity of the agent as aqueous concentrate is in the pH range of from about 5.0 to 6.5.

16. Process according to Claim 13, **characterized in that** the organic acid is a saturated or unsaturated aliphatic acid which may contain hydroxyl groups, preferably a polybasic acid, or an aromatic carboxylic acid; preferably malic acid, citric acid, tartaric acid, succinic acid, oxalosuccinic acid, gluconic acid, benzoic acid, phthalic acid or a related acid.

17. Process according to any of Claims 13-16, **characterized in that** the composition comprises an ethoxylated fatty alcohol or a mixture of ethoxylated fatty alcohols and an organic acid, preferably benzoic acid, malic acid, citric acid and/or tartaric acid, preferably a combination of benzoic acid and citric acid, and optionally gluconic acid.

18. Process according to any of Claims 3-10, **characterized in that** to produce a silicone rubber mixture at least one organopolysiloxane of the component (a) is intimately mixed with at least one surface-modified or unmodified, preferably hydrophobicized, filler of the component (e), and organohydrogenpolysiloxane of the component (b), the catalyst of the component (c) and, if desired, further organopolysiloxane of the component (a) and further additives of the components (d) and (e) to (h) are subsequently added to the mixture obtained in this way.

19. Coated shaped part or a shaped composite which has been produced using a process according to any of Claims 1-18.

## Revendications

1. Procédé de revêtement de surfaces de substrats et de préparation de pièces moulées composites; dans lequel on recouvre les surfaces de substrats d'un mélange sélectionné de caoutchoucs siliconés à réticulation par addition ou l'on réunit les substrats et/ou les combinaisons de substrats et l'on introduit le mélange de caoutchoucs siliconés à réticulation par addition dans les espaces intermédiaires, et l'on durcit ensuite à température élevée, **caractérisé en ce que** (i) on traite, avant le revêtement, les surfaces de substrats au moyen d'une composition aqueuse tensioactive à action décapante, d'un indice d'acidité (pH) d'environ 5,5 à 6,8 et (ii) on recouvre ensuite les surfaces de substrats sèches d'un mélange de caoutchoucs siliconés sous forme liquide à pâteuse, qui contient au moins les constituants suivants:
(a) un organopolysiloxane cyclique, linéaire ou ramifié, contenant des groupes alcényle avec en moyenne au moins deux groupes alcényle par molécule, et d'une viscosité de 0,01 à 30000 Pas,
(b) un organohydrogénopolysiloxane cyclique, linéaire ou ramifié, contenant éventuellement des groupes dialkylsilyloxy, de préférence avec en moyenne au moins deux groupes SiH par molécule, et
(c) une quantité catalytiquement active du composé cis-dichlorobis(styrène)platine(II), qui a éventuellement été dissous dans un solvant organique approprié,
la proportion molaire des groupes SiH présents dans le mélange par rapport aux groupes alcényle liés au Si présents dans le mélange étant d'au moins 1,5, de préférence d'environ 1,5 à 4,5 et de préférence d'environ 1,8 à environ 2,5.

2. Procédé selon la revendication 1, **caractérisé en ce que** le mélange de caoutchoucs siliconés contient le composé de cis-dichlorobis(styrène)platine(II) en quantités de 1 ppm à 5000 ppm, et de préférence de 50 ppm à 200 ppm, calculé sur le poids du platine dans le composé de platine par rapport au poids total des composants (a) et (b).

3. Procédé selon la revendication 1 ou 2, **caractérisé en ce que** le mélange de caoutchoucs siliconés contient d'autres constituants usuels en soi connus, de préférence
(d) au moins un ou plusieurs composés complexes du groupe des métaux rhodium, nickel, palladium et platine, qui sont utilisés comme tels en tant que composés catalytiquement actifs pour des réactions d'addition entre des composés de SiH et des restes alcényle, et/ou
(e) au moins une matière de remplissage, éventuellement modifiée en surface, ou un mélange de telles matières de remplissage, cette matière de remplissage ou ce mélange de matières de remplissage étant de préférence présent(e) en une quantité de 5 à 200 parties en poids, par rapport à 100 parties en poids du composant (a), et/ou
(f) au moins un inhibiteur ou un mélange d'inhibiteurs pour la stabilisation du mélange contenant les composants (a) et (b), et/ou
(g) d'autres adjuvants, de préférence des huiles siliconées phényliques, de préférence en une quantité jusqu'à 10 parties en poids, de préférence de 0,05 à 10 parties en poids, par rapport à 100 parties en poids du composant (a), et/ou
(h) des pâtes pigmentaires, de préférence des huiles siliconées contenant de 10 à 70% en poids de pigments, en une quantité jusqu'à 10 parties en poids, par rapport à 100 parties en poids du composant (a).

4. Procédé selon l'une des revendications 1 à 3, **caractérisé en ce que** l'organopolysiloxane du composant (a) représente un composé, ou un mélange de composés, de la formule générale (I): 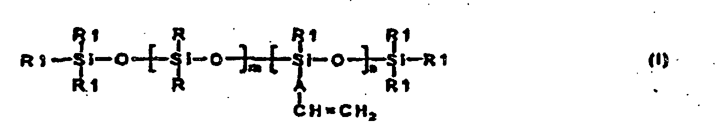 dans laquelle
R représente indépendamment un reste alkyle comportant de 1 à 8 atomes de carbone ou phényle, de préférence alkyle comportant de 1 à 4 atomes de carbone, de préférence méthyle,
R₁ a indépendamment l'une des significations de R ou est un reste -A-CH=CH₂,
A est un reste -(CₛH₂ₛ)ₚ-, de préférence -[(CH₂)ₛ]ₚ-, où
s est un nombre entier de 1 à 6, de préférence 1,
p a une valeur de zéro ou un,
m en moyenne de zéro à 5000, de préférence de 20 à 5000, de préférence de 50 à 1500,
n en moyenne de zéro à 100, de préférence de 2 à 100, de préférence de 2 à 20,
le composé ou le mélange de composés présentant en moyenne au moins deux restes -A-CH=CH₂ par molécule et les groupes -[Si(R)(R)O]-et [Si(R₁)(A-CH=CH₂)O] étant agencés dans un ordre quelconque dans la molécule.

5. Procédé selon la revendication 4, **caractérisé en ce que** p est égal à zéro ou que le reste -A-CH=CH₂ est du vinyle.

6. Procédé selon la revendication 4, **caractérisé en ce que** les deux groupes silyloxy terminaux dans le composé ou le mélange de composés de la formule générale (I) représentent indépendamment l'un de l'autre du diméthylvinylsiloxy et le composé ou le mélange de composés de la formule générale (I) présente de préférence une viscosité de l'ordre de 0,01 à 500 Pas, en particulier de l'ordre de 1 à 100 Pas.

7. Procédé selon l'une des revendications 1 à 6, **caractérisé en ce que** l'organohydrogénopolysiloxane du composant (b) correspond à un composé ou un mélange de composés de la formule générale (II): 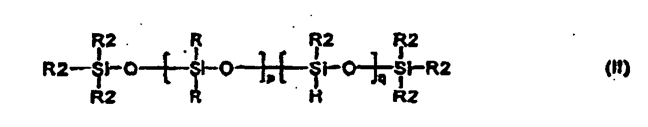 dans laquelle
R représente indépendamment un reste alkyle comportant de 1 à 8 atomes de carbone ou phényle, de préférence alkyle comportant de 1 à 4 atomes de carbone, de préférence méthyle,
R₂ a indépendamment l'une des significations de R ou est de l'hydrogène,
p est en moyenne de zéro à 5000, de préférence de 20 à 5000, de préférence de 50 à 1500,
q est en moyenne de zéro à 60, de préférence de 2 à 60, de préférence de 2 à 30,
le composé ou le mélange de composés présentant en moyenne au moins deux groupes SiH par molécule et les groupes -[Si(R)(R)O]- et -[SiH(R₂)]- étant agencés dans un ordre quelconque dans la molécule.

8. Procédé selon la revendication 7, **caractérisé en ce que** les deux groupes silyloxy terminaux dans le composé ou le mélange de composés de la formule générale (II) représentent indépendamment l'un de l'autre du diméthylhydrogénosiloxy et que le composé de la formufe (II) ou le mélange correspondant présente de préférence une viscosité de l'ordre de 0,01 à 5 Pas.

9. Procédé selon l'une des revendications 1 à 8, **caractérisé en ce que** le composant (b) représente un organohydrogénopolysiloxane cyclique, qui est composé d'unités -[Si(R)(R)O]- et -[SiH(R₂)]- ou uniquement d'unités -[SiH(R₂)]- et l'organohydrogénopolysiloxane cyclique présente de préférence de 4 à 8 de ces unités, de préférence 4 de ces unités, et correspond de préférence à la formule [-SiH(R₂)-]₄.

10. Procédé selon l'une des revendications 1 à 9, **caractérisé en ce que** le mélange de caoutchoucs siliconés contient au moins une matière de remplissage, éventuellement modifiée en surface, de préférence de l'acide silicique pyrogène ou précipité, d'une surface BET entre 50 et 400 m²/g et/ou des matières de remplissage d'allongement, de préférence du quartz pulvérisé et/ou des terres de diatomées.

11. Procédé selon l'une des revendications 1 à 10, **caractérisé en ce que** les surfaces de substrats sont en métal, verre, céramique et/ou plastique, de préférence en métal, verre et/ou céramique, de préférence en aluminium, en alliages d'aluminium, en acier au chrome-nickel, en laiton, en verre et/ou en céramique.

12. Procédé selon l'une des revendications 1 à 11, **caractérisé en ce que** la solution de traitement aqueuse contenant l'agent à action décapante présente un indice d'acidité (pH) d'environ 6,0 à 6,6, et l'on travaille en mode d'immersion, de préférence avec ultrasons auxiliaires, à une température de travail d'environ 50 à 60°C.

13. Procédé selon l'une des revendications 1 à 12, **caractérisé en ce que** la composition à action décapante (i) contient au moins un composé tensioactif ou un mélange de tels composés tensioactifs ainsi que (ii) au moins un acide inorganique ou organique soluble dans l'eau ou un sel acide correspondant, ou une combinaison de tels acides et/ou sels.

14. Procédé selon la revendication 13, **caractérisé en ce que** le composé tensioactif est, à température légèrement élevée et à des pH légèrement acides, chimiquement résistant et est de préférence un acide gras, un alcool gras ou un de leurs dérivés, de préférence un acide gras alcoxylé ou un alcool gras alcoxylé, de préférence un alcool gras éthoxylé.

15. Procédé selon la revendication 13, **caractérisé en ce que** l'acide inorganique et/ou le sel inorganique est un fluorure ou un sulfate, de préférence un fluorure, de préférence du fluorure de sodium, du fluorure de potassium et/ou du fluorure d'ammonium, et que la composition contient éventuellement en petite quantité un ou plusieurs acides inorganiques, de manière que l'indice d'acidité de l'agent en concentré aqueux soit dans la plage de pH d'environ 5,0 à 6,5.

16. Procédé selon la revendication 13, **caractérisé en ce que** l'acide organique est un acide aliphatique saturé ou insaturé, contenant éventuellement des groupes hydroxyle, de préférence un acide polyvalent, ou un acide carboxylique aromatique, de préférence l'acide malique, l'acide citrique, l'acide tartrique, l'acide succinique, l'acide oxalosuccinique, l'acide gluconique, l'acide benzoïque, l'acide phtalique ou un acide apparenté.

17. Procédé selon l'une des revendications 13 à 16, **caractérisé en ce que** la composition contient un alcool gras éthoxylé ou un mélange d'alcools gras éthoxylés ainsi qu'un acide organique, de préférence de l'acide benzoïque, de l'acide malique, de l'acide citrique et/ou de l'acide tartrique, de préférence une combinaison d'acide benzoïque et d'acide citrique, et éventuellement d'acide gluconique..

18. Procédé selon l'une des revendications 3 à 10, **caractérisé en ce que**, pour la préparation du mélange de caoutchoucs siliconés, l'on mélange intensivement au moins un organopolysiloxane du composant (a) avec au moins une matière de remplissage, éventuellement modifiée en surface, de préférence rendue hydrophobe, du composant (e), et l'on ajoute ensuite au mélange obtenu un organohydrogénopolysiloxane du composant (b), le catalyseur du composant (c), ainsi qu'éventuellement un autre organopolysiloxane du composant (a), et d'autres additifs des composants (d) et (e) à (h).

19. Pièces moulées revêtues et pièces moulées composites, préparées en utilisant un procédé selon l'une des revendications 1 à 18.
